# EUROPÄISCHE PATENTSCHRIFT

(11) **EP 2 677 184 B1**
(45) Veröffentlichungstag und Bekanntmachung des Hinweises auf die Patenterteilung: **05.08.2020**
(21) Anmeldenummer: 12172855.4
(22) Anmeldetag: 21.06.2012
(51) Int. Cl.: F16C 33/50, F16C 33/56

(54) **SEGMENT EINES WÄLZLAGERKÄFIGS**
SEGMENT OF A ROLLING BEARING CAGE
SEGMENT D'UNE CAGE DE PALIER DE ROULEMENT

(43) Veröffentlichungstag der Anmeldung: 25.12.2013
(73) Patentinhaber: Aktiebolaget SKF, 415 50 Göteborg (SE)
(72) Erfinder: Eich, Bernd, 97727 Fuchsstadt (DE); Loemba, Anselme, 97646 Niederwerrn (DE)
(74) Vertreter: Schonecke, Mitja

(56) Entgegenhaltungen:
- DE-A1- 19 856 024
- DE-A1-102006 022 951
- DE-U- 1 901 911
- JP-A- 2011 085 207
- JP-U- 56 166 321
- US-A1- 2008 260 317
- US-B1- 6 206 575

## Beschreibung

Ausführungsbeispiele der Erfindung befassen sich mit Wälzlagerkäfigen und dabei insbesondere mit der Gestaltung von Wälzlagerkäfigen.

Die meisten Wälzlager bestehen aus 2 Ringen, dem Innen- und dem Außenring sowie dazwischen angeordneten Rollenkörper bzw. Wälzkörpern. Wälzlager können abgedichtet oder nicht abgedichtet sein. Die Funktion der Lager wird zu einem großen Teil von den Wälzkörpern bestimmt. Diese wiederum werden typischerweise von Käfigen geführt und in gleichen Abständen gehalten, so dass eine gute Lastübertragung bzw. Lastverteilung auf die einzelnen Rollenkörper sichergestellt ist. Käfige können aus unterschiedlichen Materialien bestehen und deren Herstellung ist kompliziert, da die Käfige eine Vielzahl von Anforderungen erfüllen müssen.

Zum einen sollen sie verschleißfest sein und gleichzeitig oft auch eine Notlaufeigenschaft aufweisen. Darüber hinaus sollen Käfige leicht sein, ohne jedoch die erforderliche Stabilität und Langlebigkeit vermissen zu lassen. Um die exakte Führung der Wälzkörper zu ermöglichen, sollen Käfige äußerst maßhaltig produziert werden, egal ob diese aus metallischen oder aus Polymerwerkstoffen bestehen.

Bei vielen Käfigen, beispielsweise bei Schnappkäfigen, wird Kunststoff als Material verwendet, wobei zur Herstellung des vollständigen Käfigs häufig ein Spritzgussverfahren angewendet wird. Wenngleich dieses Verfahren es erlaubt, vergleichsweise komplexe Geometrien abzubilden, ist eine erfolgreiche Anwendung eines Spritzgussverfahrens stark von einer genauen Einhaltung eine Vielzahl von Prozessparametern abhängig. Beispiele für solche Parameter sind der Druck, die Temperatur des Materials und des Werkzeugs sowie die Fließgeschwindigkeit des zum Spritzgießen verwendeten Materials. Die Prozessparameter müssen jeweils sehr gut optimiert bzw. aufeinander abgestimmt sein, um trotz unterschiedlichster Geometrie und Bauteilgrößen eine niedrige Ausschussrate zu erreichen. Das heißt, die Maßhaltigkeit der erzeugten Bauteile und damit auch der erzielte Ausschuss hängt nicht nur von den inherenten Materialeigenschaften sondern auch stark von den Prozessparametern ab.

Auch die Größe der zu produzierenden Bauteile spielt eine Rolle. Bei großen Wälzlagerkäfigen kann beispielsweise der absolute Materialschwund größer sein als bei kleineren Bauteilen, so dass es insgesamt schwieriger wird die Maßhaltigkeit bei großen Wälzlagerkäfigen zu gewährleisten. Auch die Bildung von Lunkern, also die Entstehung unerwünschter Hohlräume im fertigen Bauteil, wird bei großen Bauteilen begünstigt. Abseits davon wird es mit zunehmender Bauteilgröße schwieriger, Bauteile im Spritzgussverfahren wirtschaftlich herzustellen, da bei großen Herstellungswerkzeugen in den einzelnen Werkzeugen selbst aufwändige Maßnahmen zur Temperierung des Werkzeugs bzw. des Materials und zur Einhaltung der übrigen Parameter getroffen werden müssen, was diese Werkzeuge sehr teuer macht. Große Lager und damit große Käfige werden darüber hinaus oft in kleinen Stückzahlen nachgefragt, was die wirtschaftliche Herstellung derselben zusätzlich erschwert.

In Dokument US 2008 260 317 A1 ist ein aus zwei Segmenten bestehender Wälzlagerkäfig offenbart. Die Segmente sind mittels Vorsprüngen und Fixierelementen, die in Ausnehmungen des jeweils anderen Segments eingreifen, mit einander verbunden.

Die oben beschriebenen Probleme geben Anlass, nach einem besseren Konzept für Wälzlagerkäfige zu suchen.

Anstatt eines kompletten Käfigs wird eine Mehrzahl von Segmenten eines Käfigs verwendet, die sich während der Montage einfach zu einem komplett umlaufenden Käfig eines Wälzlagers verbinden lassen.

Erfindungsgemäß ist ein Segment mit den Merkmalen des Anspruchs 1 vorgesehen. Ausführungsbeispiele von derartigen Segmenten eines Käfigs umfassen einen sich in der axialen Richtung erstreckenden Steg, der zur Führung der Wälzkörper entlang einer Umlaufrichtung dienen kann, sowie zwei mit dem Steg verbundene, sich an unterschiedlichen axialen Enden des Steges befindliche Seitenteile, welche sich in der Umlaufrichtung erstrecken. Ausführungsbeispiele von Segmenten weisen ferner ein sich in der Umlaufrichtung erstreckendes Verbindungselement zum Verbinden des Segments mit einem anderen Segment des Wälzlagerkäfigs auf, sowie eine Aufnahme für ein solches Verbindungselement, so dass das Verbindungselement eines weiteren Segments des Wälzlagerkäfigs mit der Aufnahme des Segments verbunden werden kann.

D.h. also, es können zunächst einzelne Käfigsegmente hergestellt werden, die während der Montage mittels speziell dafür vorgesehener, in Umlaufrichtung verlaufender Verbindungselemente, miteinander verbunden werden können. Durch Verwendung derartiger Segmente kann eine starke Schwindung der Segmente bzw. des gesamten Käfigs, verglichen mit einem in einem Stück hergestellten Käfig, verringert werden. Dies kann zu einer besseren Maßhaltigkeit des Käfigs führen. Diese wiederum kann zu einer besseren Funktion des Lagers bzw. zu einer größeren Langlebigkeit desselben führen. Ferner kann die Verwendung von Segmenten, beispielsweise bei großen Wälzlagerkäfigen, eine erhebliche Kostenreduktion nach sich ziehen, da zur Herstellung eines Segments eines Käfigs nur ein wesentlich kleineres Werkzeug als zur Herstellung eines kompletten Käfigs benötigt wird. Bei einigen Ausführungsbeispielen wird ein kleineres Werkzeug, ein so genanntes Typenwerkzeug, das lediglich die spezifische Form des zu produzierenden Segments wiedergibt, mit einem universell einsetzbar Grundwerkzeug kombiniert. Dabei kann das Grundwerkzeug dazu dienen, die erforderliche hohe Genauigkeit der Einhaltung der Parameter zu garantieren. Dieses Grundwerkzeug kann dabei für mehrere Ausführungsbeispiele von Segmenten für Wälzlagerkäfige identisch sein, wobei nur das kleinere, kostengünstige Typenwerkzeug neu erstellt werden braucht.

Dadurch, dass die Verbindungselemente, die zum Verbinden benachbarte Käfigsegmente verwendet werden, sich in der Umlaufrichtung, also tangential zum Umfang eines fertigen Käfigs erstrecken, kann bei einigen Ausführungsbeispielen ein kompakter Käfig verwendet werden, bei dem die Verbindungselemente nicht zu einer Erhöhung des Gesamtvolumens des Käfigs führt. Dies kann zu einer weiteren Effizienzerhöhung bzw. Kosteneinsparung führen. Der Käfig braucht also bei diesen Ausführungsbeispielen nicht, beispielsweise in radialer Richtung, größer dimensioniert werden, um ein Befestigen benachbarter Käfigsegmente aneinander zu ermöglichen.

Bei einigen Ausführungsbeispielen ermöglicht das Verbindungselement und die Aufnahme ein reversibles bzw. lösbares Verbinden der benachbarten Segmente, so dass im Schadensfall bzw. im Fehlerfall lediglich einzelne Segmente ausgetauscht werden müssen, was zu einer weiteren Erhöhung der Wirtschaftlichkeit führt.

Bei einigen Ausführungsbeispielen ist sowohl das Verbindungselement als auch die Aufnahme für das Verbindungselements einstückig mit den übrigen Komponenten des Segments ausgeführt, sodass beispielsweise mittels eines einzigen Spritzgussvorgangs alle erforderlichen Baugruppen erzeugt werden können. Bei einigen derartigen Ausführungsbeispielen ist das Verbindungselement und die zu diesem Element gehörende bzw. korrespondierende Aufnahme, an demselben Seitenteil des Segments angebracht. Dabei befindet sich das Verbindungselement selbst an dem in der Umlaufrichtung anderen Ende des Seitenteils wie die Aufnahme für das Verbindungselement. Somit kann durch eine Relativbewegung zwischen zwei benachbarten identischen Segmenten in der Umlaufrichtung das Verbindungselement in die Aufnahme gebracht und in der Aufnahme angeordnet werden.

Bei einigen Ausführungsbeispielen sind die Oberflächen bzw. die Oberflächenkonturen des Verbindungselements und der Aufnahme aneinander angepasst, so dass ein in der Aufnahme befindliches Verbindungselement sowohl in radialer als auch in axialer Richtung von der Aufnahme fixiert wird, wodurch auch die zwei benachbarten Segmente in diesen beiden Richtungen relativ zueinander fixiert sind, um einen stabilen Käfig zu erreichen. Um dies zu ermöglichen, entsprechen sich bei einigen Ausführungsbeispielen die Außen- bzw. Innenkonturen der Oberflächen des Verbindungselements und der Aufnahme zumindest an den Positionen, an denen die Konturen in unmittelbaren Kontakt miteinander geraten.

Bei einigen Ausführungsbeispielen erfolgt die Verbindung in Form einer Verrastung und unter Ausnutzung der Flexibilität des verwendeten Materials des Segmentes. D.h., bei einigen Ausführungsbeispielen wird beim Verbinden benachbarter Segmente das Verbindungselement oder die Aufnahme elastisch aus seiner unbelasteten Ruhelage verformt, bis dieses in eine Endposition schnappt bzw. rastet, in der sich das Verbindungselement innerhalb der Aufnahme befindet bzw. mit diesem verbunden ist. In der Endposition wird durch das Zusammenwirken des Verbindungselements und der Aufnahme verhindert, dass sich die so verbundenen benachbarten Segmente in der Umlaufrichtung relativ zueinander bewegen können. Bei einigen Ausführungsbeispielen verhindert ein Formschluss zwischen beiden Elementen eine solche Bewegung.

Gemäß einigen Ausführungsbeispielen ist eine Oberflächenkontur der Aufnahme für das Verbindungselement derart gestaltet, dass beim Verbinden des Verbindungselements und der Aufnahme, also bei einer Relativbewegung zweier benachbarter Segmente in der Umlaufrichtung, Teile des Verbindungselements mit der Oberflächenkontur der Aufnahme derart in Kontakt geraten, dass eine elastische Deformation des Verbindungselements oder der Aufnahme verursacht wird.

Bei einigen Ausführungsbeispielen wird das Verbindungselement bei der Relativbewegung bzw. beim Verbinden von der Oberflächenkontur derart geführt, dass sich das Verbindungselement entlang eines vorbestimmten Weges relativ zur Aufnahme bewegt, so dass es bis zu einer Endposition geführt wird, in der das Verbindungselements mit der Aufnahme verrasten kann. Eine derartige Verrastung kann bei einigen Ausführungsbeispielen dadurch erfolgen, dass sich von dem Verbindungselement ein Vorsprung bzw. eine Rastnase in einer axialen Richtung senkrecht zur Umlaufrichtung erstreckt, die in der Endposition in eine Bohrung oder Vertiefung in der Aufnahme eingreift, so dass eine Relativbewegung in oder entgegen der Umlaufrichtung verhindert werden kann. Es versteht sich von selbst, dass bei weiteren Ausführungsbeispielen beliebige andere Geometrien verwendet werden können, die ein Verrasten bewirken können.

Bei einigen Ausführungsbeispielen von Segmenten wird das Segment mittels eines Spritzgussverfahrens erzeugt, so dass das Segment zu mehr als 50 Volumenprozent aus einem spritzgussfähigen Kunststoffmaterial besteht. Verwendet werden können beispielsweise Polyetheretherketon (PEEK), Polyetherketon (PEK), Polyethersulfon (PES), Polyetherimid (PEI), Polyphenylensulfid (PPS) oder Polyamide (PA), Polyethylennaphthalat (PEN) oder Polyimid (PI), wie beispielsweise Polybenzimidazol (PBI). Bei weiteren Ausführungsbeispielen können als spritzgussfähige Kunststoffmaterialen auch Gemische bzw. "blends" dieser oder anderer Kunststoffe verwendet werden. Bei weiteren Ausführungsbeispielen werden spritzgussfähige Kunststoffmaterialen verwendet, die verstärkt sein können, also beispielsweise Fasern, Partikel oder whisker aus einem verstärkenden Material, beispielsweise aus Glasfaser oder Kohlenstoff, aufweisen.

Bei einigen Ausführungsbeispielen befindet sich im Inneren bzw. im Kern des Segments ein Verstärkungselement aus einem stabileren Material, beispielsweise aus einem Metall, um die Stabilität der Gesamtkonzeption trotz einfacher Produktion zu gewährleisten. Beispielsweise kann ein solches Verstärkungselement aus einem Blech oder einem ähnlichen Metall bestehen. Bei einigen Ausführungsbeispielen ist das Verstärkungsmaterial bzw. das Blech perforiert bzw. mit einer Mehrzahl von Löchern versehen, um einen Kraftschluss bzw. einen Formschluss zwischen dem angespritzten Kunststoff und dem Verstärkungselement zu erhöhen.

Bei einigen Ausführungsbeispielen erstreckt sich das Verstärkungselement zumindest teilweise bis in das Verbindungselement bzw. bis in einen Verbindungssteg, um die Elastizität des Verbindungselements und die Zuverlässigkeit der Verbindung zu erhöhen

Erfindungsgemäß bildet ein einzelnes Segment eine komplette Käfigtasche, d.h., das Segment weist zwei sich in der Umlaufrichtung auf gegenüberliegenden Seiten einer Tasche für einen Wälzkörper befindliche, in axialer Richtung verlaufende Stege auf, zwischen denen der Wälzkörper geführt werden kann. Zudem ist an jedem Steg eine weitere Fixiereinrichtung angebracht, die mit der Fixiereinrichtung des benachbarten Steges des jeweils benachbarten Segments verrastet bzw. sich relativ zu diesem definiert ausrichtet. Dadurch kann die Stabilität der Verbindung bzw. die Präzision, mit der benachbarte Segmente zueinander ausgerichtet sind, erhöht werden.

Einige Ausführungsbeispiele der vorliegenden Erfindung werden nach folgend, bezugnehmend auf die beigefügten Figuren, näher erläutert. Es zeigen:
- Figur 1: eine Illustration zweier miteinander verbundener Ausführungsbeispiele von Segmenten für Wälzlagerkäfige;
- Figur 2: eine Ansicht des Ausführungsbeispiels von Figur 1, wobei bei einem der Segmente ein Kunststoffmantel nicht dargestellt ist, so dass ein Verstärkungselement aus Metall sichtbar ist;
- Figur 3: eine Ansicht eines in dem Ausführungsbeispiel von Figur 1 verwendeten Verstärkungselements;
- Figur 4: eine weitere Ansicht des Verstärkungselements von Figur 4; Figur 5 eine Ansicht eines gestanzten Bleches vor dessen Formung zum Verstärkungselement von Figur 5; und
- Figur 6: ein Beispiel für einen Lagerkäfig, der aus dem in Figur 1 gezeigten Segmenten gebildet ist.

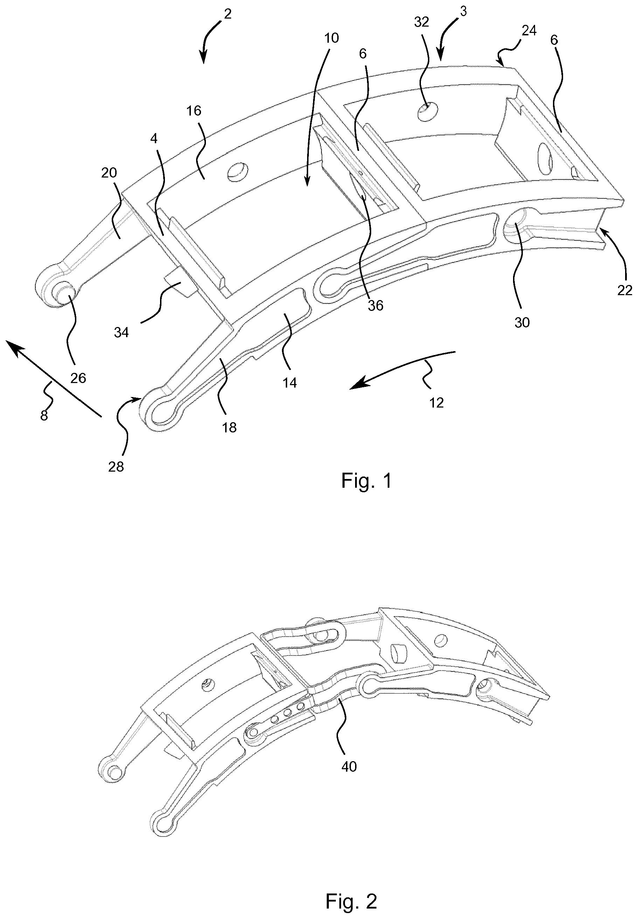

Figur 1 zeigt zwei Ausführungsbeispiele 2 und 3 eines Segments für einen Wälzlager im zusammengebauten, d.h. miteinander verbundenen Zustand. Zur Vereinfachung des Verständnisses wird zur Beschreibung einzelner Komponenten eines Segments nachfolgend jeweils auf dasjenige Segment Bezug genommen, in dem das betreffende Merkmal besser sichtbar ist.

Segment 2 umfasst einen ersten Steg 4 und einem zweiten Steg 6, welche sich jeweils in einer axialen Richtung 8 erstrecken. Als axiale Richtung 8 wird dabei der allgemeinen Terminologie folgend diejenige Richtung verstanden, die auch bei einem kompletten Lager bzw. Lagerkäfig als axiale Richtung bezeichnet wird, d.h. eine Richtung parallel zu der Rotationsachse des Lagers. Der erste Steg 4 und der zweite Steg 6 sind auf gegenüberliegenden Seiten einer Tasche 10 zur Aufnahme eines Wälzkörpers angeordnet. Um genau zu sein, sind die Stege 4 und 6 in einer Umlaufrichtung 12 auf einander gegenüberliegenden Seiten der Tasche 10 angeordnet. Als Umlaufrichtung 12 soll hier der üblichen Terminologie folgend diejenige Richtung verstanden werden, entlang derer sich der Käfig kreisförmig erstreckt, also diejenige Richtung, die in jedem Punkt tangential zum Umfang des Käfigs verläuft.

In der axialen Richtung 8 auf unterschiedlichen Seiten der Tasche 10 gegenüberliegend befinden sich ferner zwei Seitenteile 14 und 16, die jeweils mit den Stegen 4 und 6 verbunden sind. Die Seitenteile 14 und 16 sind also jeweils an einander gegenüberliegenden Seiten eines Steges mit demselben verbunden.

Das in Figur 1 dargestellte Ausführungsbeispiel weist ferner 2 sich in der Umlaufrichtung 12 erstreckende Verbindungselemente 18 und 20 auf, mittels derer das Segment 2 mit einem weiteren Segment verbunden werden kann. Wenngleich in Figur 1 ein Segment mit 2 Verbindungselementen 18 und 20 dargestellt ist, versteht es sich von selbst, dass weitere Ausführungsbeispiele lediglich ein Verbindungselement bzw. mehr als 2 Verbindungselemente aufweisen können.

Um eine Verbindung mit weiteren Segmenten zu ermöglichen, weist das Segment 2 ferner eine Aufnahme 22 für einen Verbindungselement auf, mit der ein Verbindungselement eines weiteren Segments reversibel oder irreversibel verbunden werden kann. Im vorliegenden Ausführungsbeispiel weist das Segment 2 zwei Aufnahmen 22 und 24 auf, die ausgebildet sind, um mit den dazu korrespondierenden Verbindungselementen 18 und 20 zu verrasten. Zu diesem Zweck ist eine geometrische Form der Aufnahmen 22 und 24 bzw. eine Oberflächengestaltung oder Oberflächenkontur der Aufnahmen 22 und 24 derart auf eine geometrische Form bzw. Oberflächenkontur der Verbindungselemente 18 und 20 angepasst, dass diese wie folgt beschrieben miteinander verrasten können. Bewegt man beispielsweise Segment 3 in der Umlaufrichtung 12 relativ zu Segment 2, werden die Verbindungselemente 18 und 20 zunächst in der sich verjüngenden Nut, die durch die Oberflächenkontur der Aufnahmen 22 und 24 gebildet werden, geführt. Bei der weiteren Bewegung verformen sich die Verbindungselements 18 und 20 elastisch. Diese elastische Verformung wird durch Rastnasen 26 bzw. 28, d.h. durch sich in oder entgegen der axialen Richtung 8 an den jeweiligen Verbindungselementen 18 und 20 erstreckende Erhebungen, bewirkt. Die Rastnasen 26 und 28 gleiten die Oberflächenkontur der Aufnahmen 22 und 24 entlang, wodurch die Verbindungseinrichtungen 18 und 20 elastisch deformiert werden.

Am Ende der Bewegung, also an einer Endposition, greifen die Rastnasen 26 und 28 in zu den Rastnasen korrespondierende Bohrungen 30 und 32 der Aufnahmen 22 und 24 ein. Dies ermöglicht es den Verbindungselementen 18 und 20 in eine unbelastete Ruhelage zurückzukehren, in welcher die Verbindungselemente 18 und 20 mit den Aufnahmen 22 und 24 verrastet sind. Durch die Verrastung der Rastnasen 26 und 28 mit den Bohrungen 30 und 32 wird eine weitere Relativbewegung der beiden Segmentteile in oder entgegen der Umlaufrichtung 12 verhindert. Zusätzlich wird durch die Gestaltung der Oberflächenkontur der Verbindungselemente 18 und 20, insbesondere durch die an deren Enden angebrachten zylindrischen Abschnitte, deren Durchmesser größer ist als der Durchmesser des daran anschließenden Teils des Verbindungselements 18, eine solche Bewegung zusätzlich verhindert.

Ferner wird durch die Gestaltung bzw. die gegenseitige Anpassung der Oberflächenkontur der Verbindungselemente 18 und 20 und der Aufnahmen 22 und 24 eine Relativbewegung zweier Segmente sowohl in der axialen als auch in der radialen Richtung verhindert. In der Endposition sind also zwei benachbarte Segmente 2 und 3 derart miteinander verbunden bzw. verrastet, dass eine Relativbewegung in keiner Richtung mehr möglich ist. Um eine Stabilität der Verbindung bzw. eine Genauigkeit der Positionierung zwischen zwei benachbarten Segmenten weiter zu erhöhen, weist das in Figur 1 dargestellte Ausführungsbeispiel an dem ersten Steg 4 ferner ein Fixierelement 34 auf, das sich in der Umlaufrichtung 12 in Form eines zylindrische Bolzens von dem Segment 3 erstreckt.

Dazu korrespondierend weist das Segment 2 am zweiten Steg 6 eine Aufnahme 36 für das Fixierelement 34 auf, vorliegend in Form einer zylindrischen Bohrung. Mittels des Fixierelements kann bei einigen Ausführungsbeispielen die Relativposition zweier benachbarter Segmente 2 und 3 noch genauer festgelegt werden. Es versteht sich von selbst, dass bei weiteren Ausführungsbeispielen die Geometrie des Fixierelements 34 bzw. der dem Fixierelement 34 zugeordneten Aufnahme 36 anders gestaltet sein kann, wobei die Oberflächenkonturen des Fixierelements 34 und Aufnahmevorrichtung 36 derart aufeinander abgestimmt sind, dass eine exakte Positionierung der beiden Segmente 2 und 3 relativ zueinander erreicht wird. Beispielsweise können sich in der Umlaufrichtung erstreckende Nasen quaderförmig, ellipsoid, kegelförmig, kugelförmig usw. sein. Bei weiteren Ausführungsbeispielen kann die das Fixierelement 34 zusammen mit der Aufnahmevorrichtung 36 für das Fixierelement ferner eine Rastfunktion aufweisen.

Mit anderen Worten umfasst das in Figur 1 dargestellte Segment 2 eine klassische Käfigtasche 10, die mit gabelförmigem Vorderteil (Verbindungselement 18 und 20) abgespritzt ist. Dieser Vorderteil erlaubt eine Schnappverbindung zwischen zwei miteinander verbundenen Segmenten. Durch das Aufschieben einzelner Segmente in Umfangsrichtung 12 gleiten die Säulen mit ihren Nasen (kleine Stifte) auf einer kegelförmigen Schiene (dem Hinterteil der Vorrichtung) des vorderen Segments entlang und weichen dabei ein wenig aus, bis sie Positionierungslöcher bzw. Bohrungen 30 und 32 erreichen. Während der Bewegung bleiben die Säulen bzw. die Verbindungselemente 18 und 20 innerhalb ihres elastischen Eigenschaftsbereichs. Die Führung bzw. die Geometrie der Aufnahmen 22 und 24 und der Säulen bzw. der Verbindungselemente 18 und 20 und die zentralen Positionierungsstifte (der Rastnasen 26 und 28) erlauben eine stabile Positionierung der miteinander verbundenen Segmente in axialer und radialer Richtung. Durch die Fixierung der einzelnen Segmente wird auch die Stabilisierung eines Gesamtkäfigs gewährleistet. Zusätzlich ist jedes Segment einzeln austausch- und ersetzbar.

Wie anhand von den Figuren 2 bis 5 dargestellt, umfassen einige Ausführungsbeispiele von Segmenten ferner ein Verstärkungselement 40, dass zumindest teilweise von einem weiteren Material, welches die geometrische Form des Segments bestimmt, umgeben ist. Vorliegend handelt es sich bei dem Verstärkungselement 40 um ein gestanztes Blech, dass von dem Kunststoffmaterial, das zur Herstellung des Segments verwendet wird, umspritzt ist. Ein Anteil des Kunststoffs kann bei einigen Ausführungsbeispielen mehr als 50, bei weiteren Ausführungsbeispielen mehr als 70 oder mehr als 90 Volumenprozent betragen. Beispiele für solche Kunststoffe sind PEEK, PPS oder PA, sowie die in den vorhergehenden Absätzen genannten.

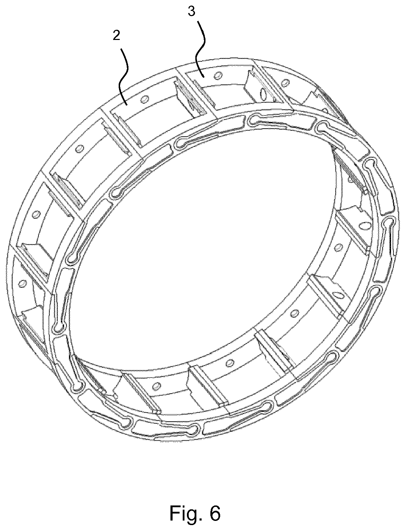

Bei dem in Figur 2 dargestellten Ausführungsbeispiel erstreckt sich das Verstärkungselement 40 aus Blech in die Verbindungselemente 18 und 20, was zum einen die Stabilität bei der elastischen Deformation erhöht und zum anderen dafür sorgen kann, dass die Stabilität der Verbindung zwischen benachbarten Segmenten erhöht werden kann, da ungewolltes Lösen der Verrastung erschwert wird, wenn das Verstärkungsmaterial eine ungewollte elastische Deformation zusätzlich hemmt. Bei dem in Figur 2 dargestellten Ausführungsbeispiel erstreckt sich der zur Verstärkung genutzte Blechstreifen zusätzlich bis zu der Aufnahme 22 bzw. über die Bohrungen 30 und 32, in die die Rastnasen 26 und 28 eingreifen, hinaus. So ist näherungsweise entlang des gesamten Umfangs eines vollständig zusammengebaut Lagerkäfigs, wie er beispielhaft in der Figur 6 und dargestellt ist, Verstärkungsblech innerhalb der Kunststoffspritzgussteile angeordnet, was zusätzlich die Stabilität des Käfigs erhöht.

Bei einigen Ausführungsbeispielen ist ein zur Verstärkung verwendetes Blech bzw. metallisches Material perforiert bzw. an vorbestimmten Positionen mit Löchern 42 gleichen oder unterschiedlichen Durchmessers versehen, was dazu beitragen kann, die Verbindung des Spritzgussmaterials mit dem Verstärkungselement bzw. dem Verstärkungsmaterial in dessen Kern zu verbessern.

Bei dem in Figur 2 dargestellten Ausführungsbeispiel wird also zur weiteren Verstärkung ein ausgestanztes und verformtes Blech in den Käfig mit abgespritzt, um die Festigkeit gesamten Käfigs zu erhöhen. Dabei sind Form und Material des Käfigs beliebig.

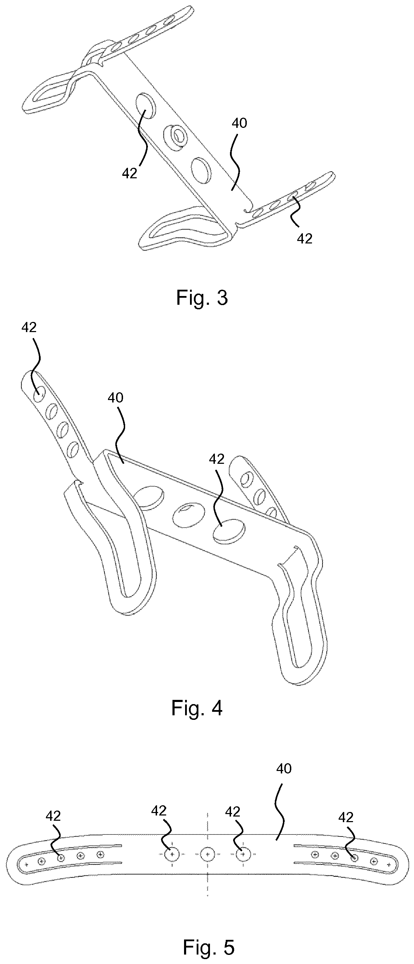

Figur 5 zeigt ein Ausführungsbeispiel eines Verstärkungselements 40 während der Herstellung. Das Verstärkungselement 40 ist als einstückiges Stanzbiegeteil ausgebildet, das mit wenigen Produktionsschritten kostengünstig und effizient hergestellt werden kann. In der in Figur 5 gezeigten Ansicht ist das gestanzte Blech des Verstärkungselements 40 nach dem Stanzen gezeigt, bei dem die Kontur und die Perforationen bzw. die erforderlichen Ausnehmungen des Verstärkungselements 40 festgelegt werden. Nach dem Stanzen kann das Verstärkungselement 40 durch einfaches Biegen schnell und kostengünstig in die in den Figuren 3 und 4 gargestellte Form gebracht werden.

Die Figur 6 zeigt der Vollständigkeit halber einen kompletten Käfig, der aus den in den vorhergehenden Figuren gezeigten Ausführungsbeispielen von Segmenten besteht.

Da bei diesen Ausführungsbeispielen die Verrastungen zwischen benachbarten Segmenten reversibel bzw. wieder zerstörungsfrei lösbar sind, können im Schadensfall lediglich einzelnen Segmente ausgetauscht werden.

Es versteht sich von selbst, dass bei weiteren Ausführungsbeispielen die Verbindung irreversibel, also nicht zerstörungsfrei lösbar, sein kann, so dass die sich in der Umfangrichtung erstreckenden Verbindungselemente mit den dazu korrespondierenden Aufnahmen beispielsweise durch Verpressen, Verkleben oder dergleichen verbunden werden können. Allgemein gesprochen kann die Verbindung auf jedwede Art und Weise kraft-, form- oder stoffschlüssig erfolgen.

Bei weiteren Ausführungsbeispielen kann sich die Geometrie der Verbindungselemente von den vorstehend beschriebenen Geometrien selbstverständlich auch unterscheiden, sofern die Verbindungseinrichtung und die dazu korrespondierende Aufnahme eine derartige Gestalt aufweisen, dass durch verbinden oder zusammenfügen der beiden Komponenten eine lösbare oder eine unlösbare Verbindung entsteht, die benachbarte Segmente relativ zueinander fixiert. Beispielsweise können alternative Verbindungselemente quaderförmig, zylindrisch, oder kegelförmig sein und beliebige kompliziertere Formen aufweisen.

### Bezugszeichenliste

- 2: Segment
- 3: Segment
- 4: Steg
- 6: zweiter Steg
- 8: axiale Richtung
- 10: Tasche
- 12: Umlaufrichtung
- 14: Seitenteil
- 16: Seitenteil
- 18: Verbindungselement
- 20: Verbindungselement
- 22: Aufnahme
- 24: Aufnahme
- 26: Rastnase
- 28: Rastnase
- 30: Bohrung
- 32: Bohrung
- 34: Fixierelement
- 36: Aufnahme für Fixierelement
- 40: Verstärkungselement
- 42: Löcher

## Patentansprüche

1. Segment (2,3) eines Käfigs für ein Wälzlager, umfassend:
einen sich in einer axialen Richtung erstreckenden Steg (4);
zwei, in der axialen Richtung an gegenüberliegenden Seiten des Steges (4) angeordnete, sich in einer Umlaufrichtung ((26) erstreckende und mit dem Steg (4) verbundene Seitenteile (14, 16);
einen zweiten sich in der axialen Richtung (8) erstreckenden Steg (6), der sich in der Umlaufrichtung (12) auf der dem Steg (4) gegenüberliegenden Seite einer Tasche (10) zur Aufnahme eines Wälzkörpers befindet;
zumindest ein sich in der Umlaufrichtung (12) erstreckendes, an einem der Seitenteile (14) an dessen in oder entgegengesetzt zu der Umlaufrichtung (12) liegenden Ende axial außen angeordnetes Verbindungselement zum Verbinden des Segments (2,3) mit einem weiteren Segment (2,3) des Wälzlagerkäfigs;
einer an dem in der Umlaufrichtung (12) entgegengesetzten Ende desselben Seitenteils (14) axial außen angeordneten Aufnahme (22) für das Verbindungselement (18), die ausgebildet ist, um mit dem Verbindungselement (18) eines weiteren Segments (2, 3) des Wälzlagerkäfigs reversibel oder irreversibel verbunden zu werden;
ein an dem ersten Steg (4) angeordnetes Fixierelement (34) zum Festlegen der Relativposition zwischen zwei benachbarten Segmenten; und
eine Aufnahmevorrichtung für das Fixierelement (36), die an dem zweiten Steg (6) angeordnet ist.

2. Segment (2, 3) nach Anspruch 1, bei dem eine Oberflächenkontur der Aufnahme (22) derart ausgestaltet ist, dass ein in der Aufnahme (22) befindliches Verbindungselement (18) in der axialen Richtung (8) und in einer dazu senkrechten radialen Richtung fixiert wird.

3. Segment (2, 3) nach einem der vorhergehenden Ansprüche, bei dem das Verbindungselement (18) entlang seiner Erstreckung in der Umlaufrichtung (12) zumindest eine sich in oder entgegen der axialen Richtung (8) erstreckende Rastnase (26, 28) zum Verrasten in einer dazu korrespondierenden Bohrung (30, 32) der Aufnahme aufweist, um ein in der Aufnahme (22) befindliches Verbindungselement (18) in der Umlaufrichtung (12) zu fixieren.

4. Segment (2, 3) nach einem der vorhergehenden Ansprüche, bei dem die Oberflächenkontur der Aufnahme (22) derart gestaltet ist, dass beim Verbinden des Verbindungselements (18) und der Aufnahme (22) in der Umlaufrichtung (12) von der Oberflächenkontur der Aufnahme (22) solange eine elastische Deformation des Verbindungselements (18) verursacht wird, bis das Verbindungselement (18) mit der Aufnahme verrastet ist und sich in der Aufnahme (22) befindet.

5. Segment (2, 3) nach einem der vorhergehenden Ansprüche, das zu mehr als 50 Volumenprozent aus einem Spritzgussfähigen Kunststoffmaterial besteht.

6. Segment (2, 3) nach Anspruch 5, bei dem das Spritzgussfähige Kunststoffmaterial zumindest teilweise ein oder mehrere Verstärkungselemente (40) aus einen Verstärkungsmaterial, beispielsweise aus einem einstückigen Stanzbiegeteil aus einem Metall, umschließt.

7. Segment (2, 3) nach Anspruch 6, bei dem sich das Verstärkungselement (40) zumindest teilweise in das Verbindungselement (18) erstreckt.

## Claims

1. Segment (2, 3) of a cage for a rolling bearing, comprising:
a web (4) which extends in an axial direction;
two side parts (14, 16) which are arranged, in the axial direction, on opposite sides of the web (4), which extend in a circumferential direction (26) and which are connected to the web (4);
a second web (6) which extends in the axial direction (8) and which is located, in the circumferential direction (12), on that side of a pocket (10) for receiving a rolling body which lies opposite the web (4);
at least one connecting element for connecting the segment (2, 3) to a further segment (2, 3) of the rolling bearing cage, said connecting element extending in the circumferential direction (12) and being arranged, axially on the outside, on one of the side parts (14) at that end of said side part which lies in, or is counter to, the circumferential direction (12);
a receptacle (22) for the connecting element (18), said receptacle being arranged, axially on the outside, at that end of the same side part (14) which is opposite in the circumferential direction (12) and being configured to be reversibly or irreversibly connected to the connecting element (18) of a further segment (2, 3) of the rolling bearing cage;
a fixing element (34) for defining the relative position between two adjacent segments, said fixing element being arranged on the first web (4); and
a receiving device (36) for the fixing element, which is arranged on the second web (6).

2. Segment (2, 3) according to Claim 1, in which a surface contour of the receptacle (22) is designed in such a way that a connecting element (18) which is located in the receptacle (22) is fixed in the axial direction (8) and in a radial direction which is perpendicular thereto.

3. Segment (2, 3) according to either of the preceding claims, in which the connecting element (18), along the extent thereof in the circumferential direction (12), has at least one latching lug (26, 28) which extends in or counter to the axial direction (8) and which is intended to latch in a corresponding bore (30, 32) of the receptacle in order to fix a connecting element (18) which is located in the receptacle (22) in the circumferential direction (12) .

4. Segment (2, 3) according to one of the preceding claims, in which the surface contour of the receptacle (22) is formed in such a way that, during the connection of the connecting element (18) and the receptacle (22) in the circumferential direction (12), an elastic deformation of the connecting element (18) is caused by the surface contour of the receptacle (22) until the connecting element (18) is latched to the receptacle and is located in the receptacle (22).

5. Segment (2, 3) according to one of the preceding claims, which is composed of an injection-mouldable plastics material up to an extent of more than 50 per cent by volume.

6. Segment (2, 3) according to Claim 5, in which the injection-mouldable plastics material at least partially encloses one or more reinforcing elements (40) composed of a reinforcing material, for example composed of a one-piece punched and bent part composed of a metal.

7. Segment (2, 3) according to Claim 6, in which the reinforcing element (40) at least partially extends into the connecting element (18).

## Revendications

1. Segment (2, 3) d'une cage de palier à roulement, comprenant :
une nervure (4) s'étendant dans une direction axiale ;
deux parties latérales (14, 16) disposées dans la direction axiale au niveau de côtés opposés de la nervure (4), s'étendant dans une direction périphérique (26) et connectées à la nervure (4) ;
une deuxième nervure (6) s'étendant dans la direction axiale (8), qui se trouve, dans la direction périphérique (12), sur le côté, opposé à la nervure (4), d'une cavité (10) de réception d'un corps de roulement ;
au moins un élément de liaison s'étendant dans la direction périphérique (12), disposé axialement à l'extérieur au niveau de l'une des parties latérales (14) au niveau de son extrémité située dans, ou à l'opposé de, la direction périphérique (12), pour relier le segment (2, 3) à un segment supplémentaire (2, 3) de la cage de palier à roulement ;
un logement (22) disposé axialement à l'extérieur au niveau de l'extrémité, opposée dans la direction périphérique (12), de la même partie latérale (14), pour l'élément de liaison (18), qui est réalisé de manière à être relié de manière réversible ou irréversible à l'élément de liaison (18) d'un segment supplémentaire (2, 3) de la cage de palier à roulement ;
un élément de fixation (34) disposé au niveau de la première nervure (4) pour fixer la position relative entre deux segments adjacents ; et
un dispositif de réception pour l'élément de fixation (36), qui est disposé au niveau de la deuxième nervure (6).

2. Segment (2, 3) selon la revendication 1, dans lequel un contour de surface du logement (22) est configuré de telle sorte qu'un élément de liaison (18) se trouvant dans le logement (22), soit fixé dans la direction axiale (8) et dans une direction radiale perpendiculaire à celle-ci.

3. Segment (2, 3) selon l'une quelconque des revendications précédentes, dans lequel l'élément de liaison (18) présente, le long de son étendue dans la direction périphérique (12), au moins un ergot d'encliquetage (26, 28) s'étendant dans, ou à l'opposé de, la direction axiale (8), pour l'encliquetage dans un alésage (30, 32) correspondant du logement, afin de fixer dans la direction périphérique (12) un élément de liaison (18) se trouvant dans le logement (22).

4. Segment (2, 3) selon l'une quelconque des revendications précédentes, dans lequel le contour de surface du logement (22) est configuré de telle sorte que lors de la liaison de l'élément de liaison (18) et du logement (22) dans la direction périphérique (12), une déformation élastique de l'élément de liaison (18) soit causée par le contour de surface du logement (22) tant que l'élément de liaison (18) n'est pas encliqueté avec le logement et ne se trouve pas dans le logement (22).

5. Segment (2, 3) selon l'une quelconque des revendications précédentes, qui se compose, à raison de plus de 50 % en volume, d'un matériau en plastique pouvant être moulé par injection.

6. Segment (2, 3) selon la revendication 5, dans lequel le matériau en plastique pouvant être moulé par injection enveloppe au moins en partie un ou plusieurs éléments de renforcement (40) constitués d'un matériau de renforcement, par exemple constitués d'une pièce estampée cintrée d'une seule pièce en métal.

7. Segment (2, 3) selon la revendication 6, dans lequel l'élément de renforcement (40) s'étend au moins en partie dans l'élément de liaison (18).
